# EUROPEAN PATENT APPLICATION

(11) **EP 2 738 525 A1**
(43) Date of publication of application: **04.06.2014**
(21) Application number: 12306471.9
(22) Date of filing: 28.11.2012
(51) Int. Cl.: G01F 1/66

(54) **Fluid flow stabilizer for an ultrasonic flow meter**

(71) Applicant: Itron France, 92130 Issy-Les-Moulineaux (FR)
(72) Inventor: Caciu, Costin, 92130 Issy-les Moulinaux (FR); Meyer, Leo, 92130 Issy-les Moulinaux (FR); Elattar, Abdel-Hakim, 92130 Issy-les Moulinaux (FR); Hyvernat, Stephane, 92130 Issy-les Moulinaux (FR)
(74) Representative: Lloyd, Robin

(57) **Abstract**

A fluid flow stabilizer (120) for an ultrasonic flow meter comprising a body including a substantially circular aperture (124) and one or more concentric rings of apertures provided around the substantially circular aperture. Each of the apertures (125A-125D, 126A-126H) of the one or more concentric rings of apertures being formed as an annular segment. The substantially circular aperture (124) and the annular segments (125A-125D, 126A-126H) form flow channels extending through said body (130).

## Description

The present application relates to a fluid flow stabilizer, in particular, but not exclusively, a fluid flow stabilizer for an ultrasonic fluid flow meter. The application also relates to an adapter for mounting an ultrasonic measuring cell comprising a fluid flow stabilizer and also to an ultrasonic capsule meter comprising an adapter and fluid flow stabilizer.

Fluid flow meters of the ultrasonic type are known. An example of such a meter is described in EP1975573. An adapter for mounting an ultrasonic measuring cell of capsule type is also known from EP2365295.

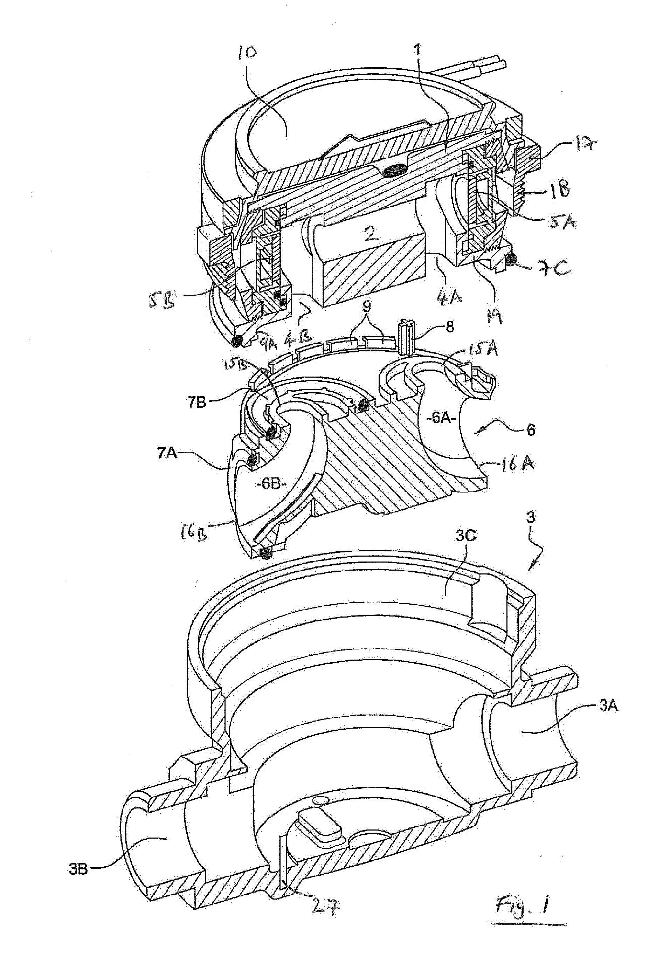

Figure 1 shows such a known fluid flow meter in exploded form. The fluid flow meter comprises an ultrasonic measuring cell 1. The cell 1 includes a tubular measuring channel 2. An inlet orifice 4A is provided connected to the inlet of the measuring channel 2 and an outlet orifice 4B is provided connected to the outlet of the measuring channel 2. At each end of the channel 2, an ultrasonic transmitter and receiver 5A, 5B are provided. The function of the transmitter and receiver 5A, 5B to measure the fluid flow rate is described in EP1975573 and will not be described further here.

The ultrasonic measuring cell 1 is mounted and supported on an adapter 6. The adapter comprises an inlet channel 6A which is arcuate in form and progresses from a substantially circular aperture 16A to an oblong aperture 15A with semi-circular ends which is in sealing alignment with the inlet orifice 4A of the cell 1. An outlet channel 6B is provided in similar form to the inlet channel 6A. The outlet channel 6B progresses in arcuate form from an oblong, semi-circular ended aperture 15B which is in sealing alignment with the outlet orifice 4B to a substantially circular aperture 16B.

The adapter 6 comprises at least one interlocking pin or protrusion 8 which is configured to be received in a corresponding aperture (not shown) in a base 19 of the cell 1. The adapter 6 further comprises a plurality of spaced resilient L-shaped protrusions 9 which are received in a recess 9A in the base 19 of the cell 1. A sealing ring or gasket 7B is located in a recess provided around the oblong aperture 15B of the outlet channel 6B. The sealing ring or gasket 7B, which may be formed of rubber or any other suitable material serves to provide a water-tight seal between the outlet orifice 4B of the cell and the oblong aperture 15B in the outlet channel 6B.

During assembly of the fluid flow meter, the cell 1 is connected to the adapter 6 such that a fluid passage is provided from the circular inlet aperture 16A of the inlet channel 6A through the inlet orifice 4A of the cell 1, the channel 2, the outlet orifice 4B of the cell 1 and to the outlet channel 6B of the adapter 6.

The assembled cell 1 and adapter 6 is located within a body 3. The body 3 comprises an inlet aperture 3A and an outlet aperture 3B which, when assembled, are aligned with the inlet circular aperture 16A of the inlet channel 6A and the outlet circular aperture 16B of the outlet channel 6B.

The adapter 6 is provided with a sealing ring or gasket around the circular outlet aperture 16B of the outlet channel 6B which provides a seal against an inner surface of the body outlet aperture 3B. An inner circumferentially extending surface 3C of the body 3 is provided with an internal screw thread, which engages with an external screw thread 18 provided around a circumference of the cell 1. A clamping ring 17 is provided around the top of the screw thread 18. The clamping ring 17 is rotated to screw the cell 1 and adapter 6 into the base 3. Locating parts 27 are provided in the base 3 which engage with orientation gadroons (not shown) provided on an outer surface of the adapter 6.

The size of the measuring channel 2 and adapter 6 is chosen dependent on the flow rates of fluid, for example water, normally flowing through the fluid flow meter. The meter shown in Figure 1 is, for example, suitable for flow rates up to 1.5m³/hour. For higher flow rates, the average diameter of flow path thought the flow meter or capsule has to be increased to keep the pressure head loss through the meter less than a predetermined value, for example 0.25 bar at a nominal flow rate in accordance with European Standard EN1434.

However, with a view to minimizing or avoiding an increase in the external dimensions of the ultrasonic measuring cell and the adapter, for an increased flow rate it is necessary to increase the size of at least some of the apertures in the adapter and the measurement cell. As a consequence, the length of the ultrasonic measuring channel is reduced. This can also have the effect that the flow velocities in the measuring channel are reduced. This can result in lower measurement accuracies of the meter. In addition, when the apertures in the flow meter are increased, the ultrasonic flow meter can be more sensitive to the conditions upstream of the flow meter, for example flow disturbances. This can also affect the accuracy of flow measurement.

The present invention seeks to alleviate, at least to a certain extent the problems and/or address at least to a certain extent the difficulties associated with the prior art.

According to a first aspect of the present invention, there is provided a fluid flow stabilizer for an ultrasonic flow meter, the stabilizer comprising a body including a substantially circular aperture and one or more concentric rings of apertures provided around the substantially circular aperture, each of the apertures of the one or more concentric rings of apertures being formed as an annular segment, the substantially circular aperture and the annular segments forming flow channels extending through said body.

The provision of an arrangement of apertures and fluid flow channels has surprisingly been found to advantageously reduce the effect of flow disturbances on fluid flow measurement in an ultrasonic flow meter while avoiding undue increase in pressure or head loss.

Preferably, the fluid flow stabilizer is an ultrasonic flow meter fluid flow stabilizer. More preferably, the fluid flow stabilizer is an ultrasonic capsule flow meter fluid flow stabilizer. Preferably, the flow meter is configured to measure liquid flow rate, for example water flow rate. The rings of apertures are preferably concentric with the axis of the substantially circular aperture.

Preferably, the annular segments of each of one or more concentric rings are equi-angularly spaced around said substantially circular aperture. If there is more than one concentric ring of annular segments, the annular segments in one ring may be of a different length to the annular segments in an adjacent ring. The length, e.g. circumferential length, of each of the annular segments in a ring may be substantially equal. A symmetrical arrangement of apertures may therefore be provided which advantageously seeks to improve fluid flow. The width of each annular segment is preferably substantially constant along its length, e.g. circumferential or rotational extent or length. Preferably, each annular segment in a ring of apertures has substantially equal area.

Preferably, the stabilizer comprises a first and a second concentric ring of apertures. The apertures in the first and second concentric rings may be of substantially equal radial extent or internal width. The length of each aperture of annular segment is preferably equal in a ring of apertures.

Preferably, the annular segments are formed with rounded ends, more preferably with a diameter substantially equal to the radial extent or thickness or width of the annular segments. In this way, abrupt or angled transitions in geometry are avoided and provide improved interaction with the fluid flow.

Preferably, the circular aperture and the annular segment apertures are provided with radiused edges between internal side walls of the formed channels and an upstream and/or downstream face of the fluid flow stabilizer.

Preferably, an, in use, upstream face of the body is formed with a substantially convex surface. Preferably, an, in use, downstream face of the body is formed with a substantially concave surface.

Preferably, the circular aperture and annular segments extend substantially parallel through the body. A slight draft of up to 10 degrees may be provided to the channels formed by the circular aperture and annular segments. This serves to assist removal of the stabilizer from a mould.

Preferably, each of the annular segments extends between 45 degree and 90 degrees about the axis of the circular aperture. Preferably, where a first and second ring of apertures is provided, the annular segments of the first ring extend or have an angle of rotation of between 75 degrees to 90 degrees, more preferably between 85 degrees and 90 degrees around the axis of the circular aperture. Preferably, the apertures of the second ring of apertures extend or have an angle of rotation of between 40 and 50 degrees, more preferably around 45 degrees around the axis of the circular apertuere. Preferably, the second ring of apertures is located radially outwardly from the first ring of apertures.

Preferably, the circular aperture and the rings of apertures and/or the annular segments are rotationally symmetrical.

Preferably, the apertures of the first ring of apertures are offset from the apertures of the second ring of apertures. Preferably, the ends of the apertures are out of alignment or positioned midway around the circumference of a radially adjacent aperture.

Preferably, the flow channels formed by the circular aperture and the annular segments are of substantially equal length.

Preferably, the diameter of the circular aperture is between 30% and 40% of the outer diameter of the outermost of the one or more rings of apertures. More preferably, the diameter of the circular aperture is between 32.5% and 37.5% or more preferably 35% of the outermost diameter of the outermost of the one or more rings of apertures. Preferably, the outer diameter of the outermost of the one or more rings of apertures is configured to be substantially equal to an inlet aperture of an adapter to which the stabilizer may be fitted.

Preferably, the radial extent or internal width of the annular segments is between 20% and 30% of the outermost radius of the outermost ring of apertures. More preferably, the radial extent or width of the annular segments is between 22.5% and 27.5% and more preferably around 25% of the outermost radius of the outermost ring of apertures.

Preferably, the total or sum of minimum distances or spacing or angular spacing between the ends of annular segments in each ring of apertures is less than 10%, more preferably less than 7.5% of the outer circumference of the annular segments in the ring. Preferably, the gaps or spacing between adjacent apertures in a ring is minimised.

Preferably, the proportion of aperture area to the overall area of a face of the stabilizer configured to fit over an inlet aperture is chosen to minimise pressure loss. Preferably, the proportion of aperture area to overall area is more than 80%, more preferably more than 90%, more preferably, more than 95%. Preferably, the proportion of aperture area to overall area of a face of the stabilizer configured to fit or cover an inlet aperture is configured to minimise head loss to below 0.25 bar.

Preferably, the maximum thickness of the flow stabilizer between a front face and a rear face thereof is between 10% and 30%, more preferably between 15% and 25%, most preferably around 20% of the outmost diameter of the outermost ring of apertures.

Preferably, the flow stabilizer is disc shaped.

Preferably, the first ring of apertures is located adjacent the substantially circular aperture and comprises four annular segments and the second ring of apertures is located adjacent the first ring of apertures and comprises eight annular segments. Preferably, the first ring of apertures is located adjacent the substantially circular aperture and consists of four annular segments and the second ring of apertures is located adjacent the first ring of apertures and consists of eight annular segments.

Preferably, the radial spacing between the substantially circular aperture and adjacent ring of apertures and/or between a first ring or apertures and a second ring of apertures is less than 10% of an outermost diameter of an outermost ring of apertures. Preferably, the radial spacing between apertures is minimised.

Preferably, the fluid flow stabilizer is formed of a plastics material or a material suitable for the fluid flowing therethrough.

According to a second aspect of the invention, there is provided an adapter for mounting an ultrasonic measuring cell, the adapter comprising an inlet channel and an outlet channel, the adapter comprising a fluid flow stabilizer according to the first aspect arranged over an inlet aperture of said inlet channel.

Preferably, the inlet aperture to the inlet channel of the adapter is in axial alignment with an outlet aperture to said outlet channel of said adapter.

Preferably, the inlet aperture and outlet aperture of the adapter are circular. Preferably, the inlet channel and outlet channel are arcuate in form.

Preferably, each of the inlet channel and the outlet channel change the direction of flow through 90 degrees.

Preferably, the adapter includes coupling means for coupling to the stabilizer. Preferably, the coupling means comprises a socket to receive a corresponding pin or protrusion of the stabilizer and a pin to engage with a corresponding clip provided on the stabilizer.

Preferably, the adapter is formed integrally with said fluid flow stabilizer. The adapter and stabilizer may be formed as a single piece. Preferably, the adapter and/or stabilizer may be formed of a plastics material by moulding, investment casting or any other suitable process.

According to a further aspect of the invention, there is provided an ultrasonic fluid flow meter comprising an adapter according to the second aspect of the invention or a fluid flow stabilizer according to the first aspect of the invention.

Preferably, the fluid flow meter is mounted in a body comprising an inlet and an outlet orifice which may be connected in line with a pipe or other fluid conduit.

Preferably, the inlet channel of the adapter provides a fluid connection from the inlet orifice of the body to an inlet to a measuring channel in the flow meter. Preferably, the outlet channel of the adapter provides a fluid connection from the outlet orifice of the body to an outlet of the measuring channel in the flow meter.

Preferably, an ultrasonic transmitter and receiver are provided at each end of the measuring channel.

The fluid flow stabilizer is preferable provided within the body upstream of the inlet channel of the adapter. Preferably, the stabilizer is configured to reduce the metrology error to less than 2%.

The present invention may be carried out in various ways and embodiments of the present invention will now be described by way of example by reference to the attached drawings in which:
Figure 1 shows a known ultrasonic fluid flow meter as already described above;
Figure 2 shows an underside view of an adapter for an ultrasonic flow meter;
Figure 3 shows a side perspective view of the adapter of Figure 2 in exploded form with gasket seals and a fluid flow stabilizer;
Figure 4 shows a cross section through the channels of the adapter of Figure 2;
Figure 4A shows a detail view of a coupling means between the fluid flow stabilizer and the adapter;
Figure 5 shows a plan view of the adapter of Figure 2;
Figure 6 shows a perspective view of an ultrasonic measuring cell assembled with the adapter of Figure 2 and a fluid flow stabilizer;
Figure 7 shows a bottom perspective view of the adapter of Figure 2 with the fluid flow stabilizer located on an inlet aperture of an inlet channel to the adapter;
Figure 8 shows a cross-section through an assembled flow meter;
Figure 9A shows a front view of a fluid flow stabilizer;
Figure 9B shows a top view of the fluid flow stabilizer of Figure 9A;
Figure 9C shows a detail view of adjustment means of the fluid flow stabilizer of Figure 9A;
Figure 9D shows a cross-section through the fluid flow stabilizer of Figure 9A;
Figure 9E shows a rear view of the fluid flow stabilizer of Figure 9A; and
Figure 10 shows a comparison of metrology error against fluid flow rate for an ultrasonic meter both with and without a fluid flow stabilizer.

It should be noted that although some of the drawings show dimensions, the invention is not limited to these dimensions. However, the dimensions may be used to show preferred ratios or relationships between the dimensions of different parts. However, again, it should be noted that the invention is not limited to the ratio or relationships between the dimensions shown in the drawings and other embodiments are envisaged which fall within the scope of the claims.

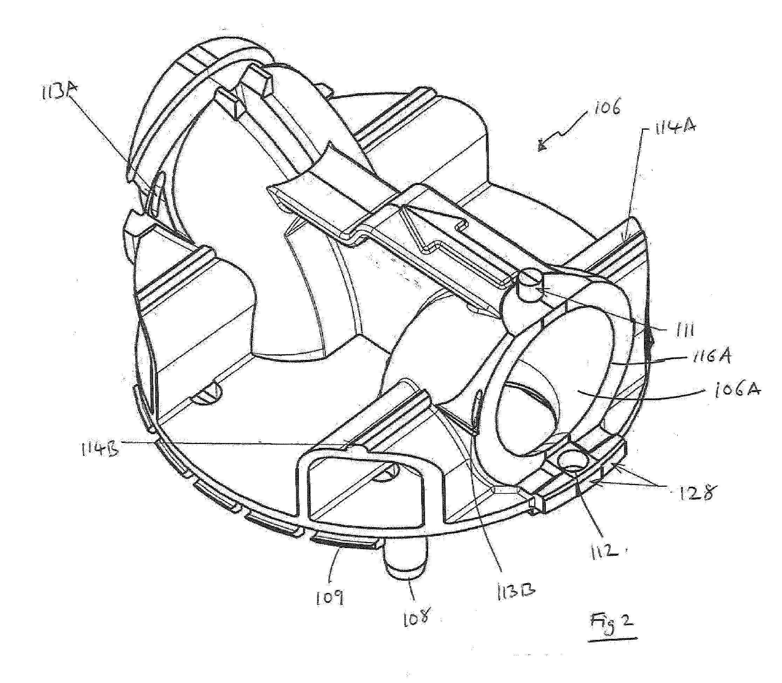

Figure 2 shows an example of an adapter 106 for receiving an ultrasonic measuring cell 1. The adapter 106 is shown from below. The adapter 106 is similar to the adapter described in relation to Figure 1. The adapter includes L-shaped protrusions 109 and interlocking pins 108 for connection with the ultrasonic measuring cell. The adapter 106 includes an inlet channel 106A which has a substantially circular inlet aperture 116A.

Also shown in Figure 2 are orientation gadroons 113A, 113B which align with corresponding locating protrusions on a body into which the adapter 106 is assembled. Adjustment bosses 114A, 114B are provided on the base of the adapter and serve to maintain the adapter in spaced arrangement from the base in which the adapter 106 is assembled.

Around the inlet aperture 116A, a substantially planar face is provided. A receiving socket 113 is provided in a protruding ledge 128 which extends from the planar face around the inlet aperture 116A. A cylindrical pin 111 is provided at a position 180 degrees from the socket 113 around the axis of the inlet aperture 116A. The central axis of the socket 113 and the central axis of the pin 111 are in substantial parallel alignment.

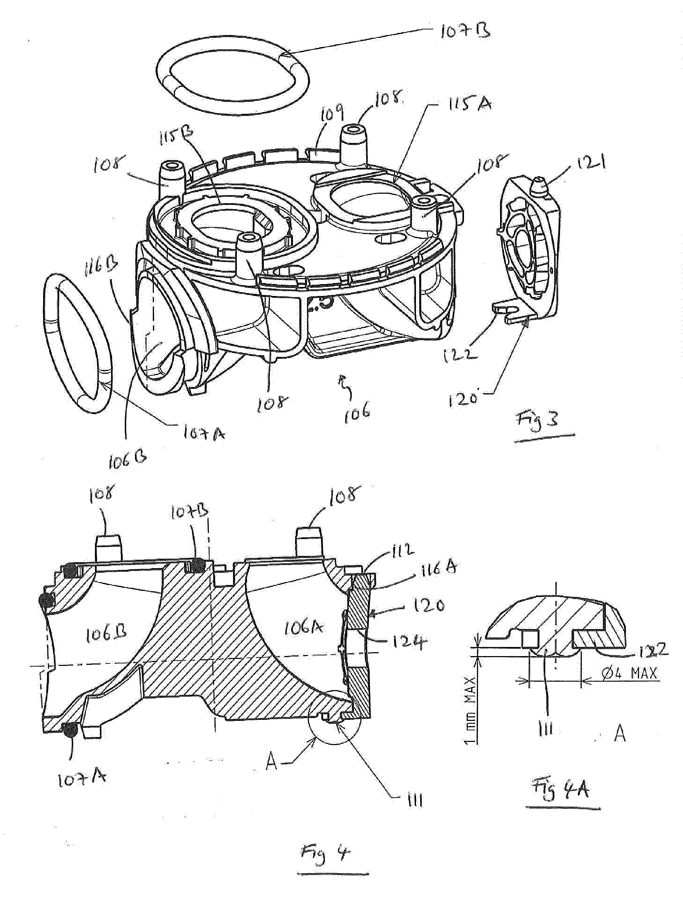

Figure 3 shows a further exploded view from the top of the adapter 106. As with the adapter 6 of Figure 1, the circular outlet 116B of the outlet channel 106B is provided with a sealing ring or gasket 107A. The inlet aperture 115B to the outlet channel 106B is also provided with a sealing ring or aperture 107B.

As can be seen in Figure 3, four interlocking pins or protrusions 108 are provided spaced around the circumference of the adapter. The inlet aperture 115B of the outlet channel 106B and the outlet aperture 115A of the inlet channel 106A are in planar alignment. The apertures 115A, 115B have apertures which are substantially oblong with semi-circular ends. The width to length ratio of the apertures 115A, 115B is greater than the width to length ratio of the apertures 15A, 15B shown in Figure 1.

A flow stabilizer 120 is shown which is substantially disc-shaped in form. The flow stabilizer includes a clip 122 extending from a base of the stabilizer in a direction substantially perpendicular to an end face of the stabilizer. The flow stabilizer further includes a frustro-conical protrusion 121 extended from the top of the stabilizer.

Figure 4 shows a cross section in a vertical plane extending through the inlet and outlet channels 106A, 106B. The flow stabilizer is aligned adjacent the inlet 116A of the inlet channel 106A of the adapter 106. The frustro-conical protrusion 112 is located in the socket 112 of the adapter 106. The clip 122 is shown located around the pin 111 extended from below the adapter 106. The stabilizer 120 includes a circular aperture 124 which assembled is substantially centrally located over the inlet aperture 116A.

As shown in greater detail in Figure 4A, the head of the pin 11 has been deformed to fixedly attach the stabilizer to the adapter 106. Although not shown, it is also envisaged that the adapter 106 and stabilizer 120 may be formed as a single piece, for example from a moulded plastics material.

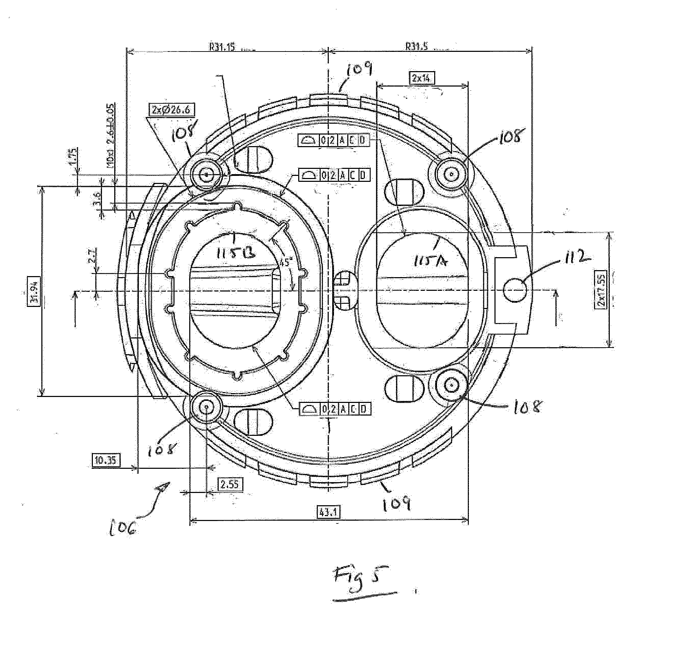

Figure 5 shows a plan view of the adapter 106. Here, the form of the outlet aperture 115A of the inlet channel 106A and the inlet aperture 115B of the outlet channel 106B are more clearly shown. The L-shaped protrusions 109 are provided spaced around the perimeter of the adapter 106. Four interlocking pins 108, one in each quadrants of the surface of adapter 106. The socket 112 is provided for receiving the frustro-conical protrusion of the stabilizer.

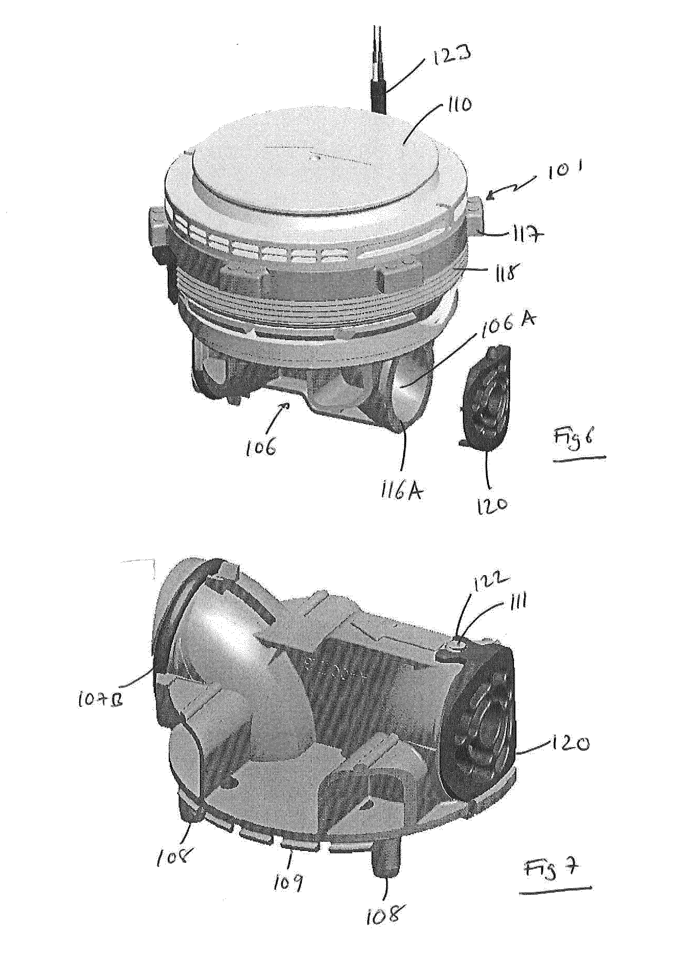

Figure 6 shows the adapter 106 connected with an ultrasonic measuring cell 101. The inlet aperture 116A to the inlet channel 106A is shown with the stabilizer 120 not fitted. A cover 110 is provided to the ultrasonic measuring cell 101. Control wires 123 are connected to the ultrasonic measuring cell 101.

Figure 7 shows a bottom view of the adapter 106 with the stabilizer 120 in position and with the clip 122 located around the pin 111. The pin 111 has been deformed to fix the stabilizer to the inlet aperture of the inlet channel 106A and prevent removal of the stabilizer 120 from the adapter 106. The sealing ring 107B is also shown around the outlet aperture of the outlet channel 106B.

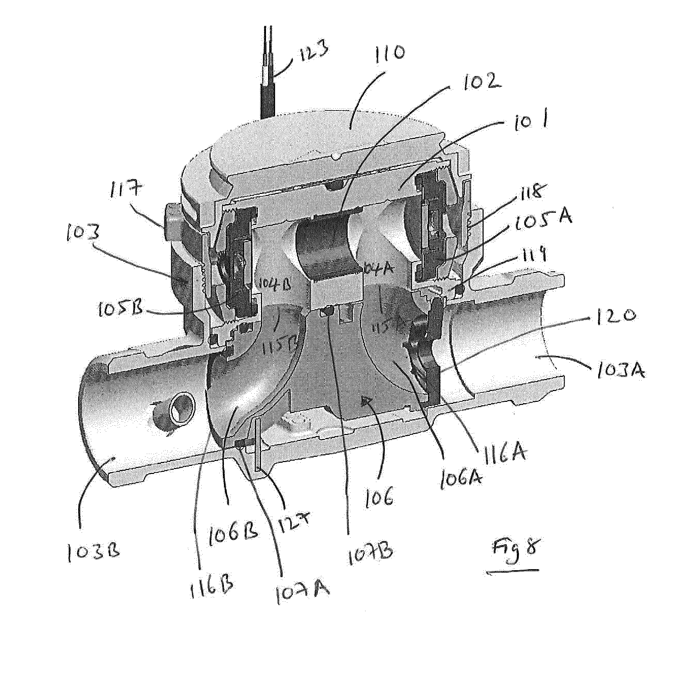

Figure 8 shows a cross section through an assembled ultrasonic fluid flow meter comprising an ultrasonic measuring cell 101, an adapter 106 and a base 103.

The measuring cell 101 includes a tubular ultrasonic measuring channel 102, which can be seen to have a greater diameter to length ratio than the measuring channel 2 shown in Figure 1. An inlet orifice 104A is provided connecting to the inlet of the measuring channel 102 and an outlet orifice 104B is provided connecting to the outlet of the measuring channel 102. At each end of the channel 102, an ultrasonic transmitter and receiver 105A, 105B is provided.

The ultrasonic measuring cell 101 is mounted and supported on the adapter 106. The adapter comprises an inlet channel 106A which is arcuate in form and progresses from a substantially circular aperture 116A to an oblong, semi-circular ended aperture 115A which is in sealing alignment with the inlet orifice 104A of the cell 101. An outlet channel 106B is provided in similar form to the inlet channel 106A. The outlet channel 106B progresses in arcuate form from an oblong, semi-circular ended aperture 115B which is in sealing alignment with the outlet orifice 104B to a substantially circular aperture 116B.

The inlet channel 106A is formed to change the direction of flow of a fluid passing therethrough through an angle of 90 degrees. Similarly, the outlet channel also changes the direction of flow through 90 degrees. The inlet channel 106A and outlet channels 106B may therefore be described as elbows.
In the orientation of the adapter 106 shown in Figure 8, the direction of flow changes from being substantially horizontal at the inlet aperture 116A to being substantially vertical. The measuring channel 102 is orientated substantially horizontally. However, it should be understood that the orientation of the meter with respect to the horizontal can be changed according to application and while the absolute orientation of parts may therefore be changed, the relative orientation between parts of the meter, i.e. the base 103, the adapter 106 and the ultrasonic measuring cell 101 will remain substantially the same.

The sealing ring or gasket 107B is located in a recess provided around the aperture 115B of the outlet channel 106B. The sealing ring or gasket 107B, which may be formed of rubber or any other suitable material serves to provide a water-tight seal between the outlet orifice 104B of the cell and the oblong aperture 115B in the outlet channel 106B. The inlet aperture 116A and outlet aperture 116B of the inlet and outlet channels 106A, 106B respectively are in substantial axial alignment.

As assembled, a continuous fluid passage is provided through the circular inlet aperture 116A of the inlet channel 106A through the inlet orifice 104A of the cell 101, the channel 102, and the outlet orifice 104B of the cell 101 to the outlet channel 106B of the adapter 106.

The assembled cell 101 and adapter 106 is located within a body 103. The body 103 comprises an inlet aperture 103A and an outlet aperture 103B which are aligned with the inlet circular aperture 116A of the inlet channel 106A and the outlet circular aperture 116B of the outlet channel 106B.

The adapter 106 is provided with a sealing ring or gasket 107B around the circular outlet aperture 116B of the outlet channel 106B which provides a seal against an inner surface of the body outlet aperture 103B. An inner circumferentially extending surface of the body 103 is provided with an internal screw thread, which engages with an external screw thread 118 provided around a circumference of the cell 101. A clamping ring 117 is provided around the top of the screw thread 118. The clamping ring 117 is rotated to screw the cell 101 and adapter 106 into the base 103. Locating parts 127 are provided in the base 103 which engage with orientation gadroons 113 as shown in Figure 2 provided on an outer surface of the adapter 106.

The flow stabilizer 120 is shown located at the inlet aperture 116A of the inlet channel 106A of the adapter 106 such that the flow stabilizer is provided upstream of the measuring cell.

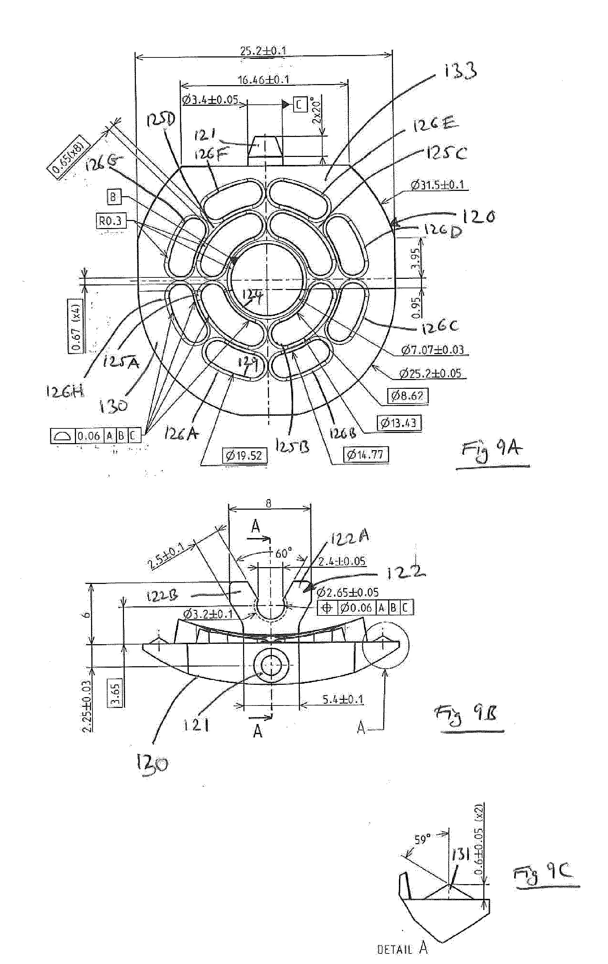

Figure 9A shows a front view of the stabilizer 120. While dimensions are shown in the Figures, it should be understood that these are not limiting. The dimensions may however show preferred ratios or relationships between dimensions. However, it should be understood that the invention is not limited to the ratios shown in the Figures.

The flow stabilizer 120 is formed substantially as a circular disc. The flow stabilizer comprises a body 133 provided with a central circular aperture 124. Around the central circular aperture, two rings of annularly extending apertures are provided. The first ring comprises 4 annularly extending apertures or annular segements125A, 125B, 125C, 125D spaced around the central aperture 124. Each of the apertures 125A, 125B, 125C, 125D is formed with curved or radiused ends with a diameter substantially equal to the radial width of the aperture.

Each of the apertures 125A, 125B, 125C, 125D is radiused around its perimeter in the transition between the front surface of the stabilizer and the inner perimeter wall of each aperture or annular segment 125A, 125B, 125C, 125D. The inner perimeter walls of each aperture extend substantially perpendicular to a tangential plane to the surface of the stabilizer. In this way, when assembled with the adapter, the apertures form channels which extend parallel to the axis of the inlet aperture 103A of the base 103.

A second ring of annular apertures or segments is arranged adjacent the first ring of annular apertures. The second ring of annular apertures comprises eight apertures 126A through 126H angularly spaced around the first ring of apertures. The radially outermost edge or wall 129 of the second ring of apertures 126A-126B is sized to be in substantially alignment with the circular inlet aperture 116A of the inlet channel 106A when the stabilizer 120 is assembled with the adapter 106. In the embodiment, the diameter of the central aperture is around 36% of the diameter of the outermost edge or wall of the second ring of apertures 126A-126H and around 53% of the diameter of the outermost edge or wall of the first ring of apertures 125A-125D.

In the embodiment, the width of each of the apertures in the second ring of apertures is substantially equal to the width of each of the apertures in the first ring of apertures.

The apertures in the first and the second ring are substantially symmetrically arranged about a plane extending through the frustro-conical protrusion 121 provided along a planar edge on one side of the stabilizer 120. When assembled the planar edge rests against a corresponding ledge on the adaptor 106.

Figure 9A shows a view from atop the frustro-conical protrusion. The clip 122 can be seen comprising a pair of arms 122A, 122B around a receiving aperture with a 60 degree opening extending to a circular receiving part for engaging with the pin 111 on the adapter 106.

The stabilizer 120 has an upstream face 130 which has a curved or convex form when viewed as shown in Figure 9B. The apertures 125A-125D, 126A-126H extend through the stabilizer forming a plurality of flow apertures or channels.

Figure 9C shows detail A highlighted in Figure 9B and adjustment protrusions 131 on either side of the rear or downstream face of the flow stabilizer 120.

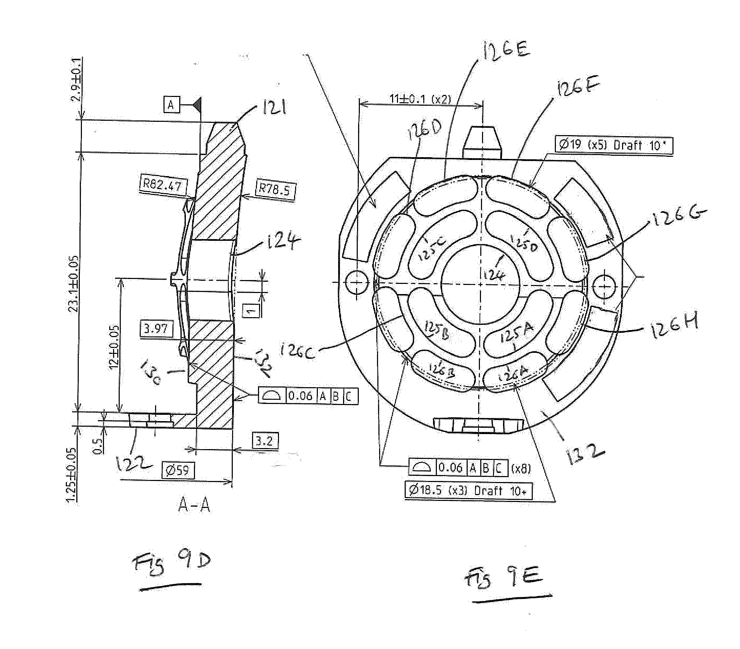

Figure 9D shows a cross section along plane A-A shown in Figure 9B. Both the interior, downstream face 132 and exterior, upstream face 130 are formed with radiused profiles. In the embodiment, the thickness of the stabilizer is around 56% the diameter of the central aperture 124 or 20% of the outermost diameter of the outermost ring of apertures. The depth or axial extent of each of the apertures 125A-125D, 126A-126H is substantially equal. The depth of the channels, in the embodiment, is around 56% of the diameter of the central aperture 124.

Figure 9E shows a view of the rear or downstream face 132 of the stabilizer 120. The downstream side of the first and second rings of annular apertures 125A-125D, 126A-126H can be seen. The outermost perimeter edge or wall of the second ring of apertures 126A-126H is provided with a draft of around 10 degrees such that the outermost perimeter edge on the downstream face 132 of the stabilizer 120 has a diameter slightly less than that on the upstream face 103.

When installed in an assembled ultrasonic flow meter, the flow stabilizer has advantageous been found to improve the measurement accuracy of the fluid flow meter and reduce the effect of flow disturbances provided upstream from the meter. Such flow disturbances may include partially opened valves. In addition, the fluid flow may have a swirl velocity which could reduce the accuracy of the meter.

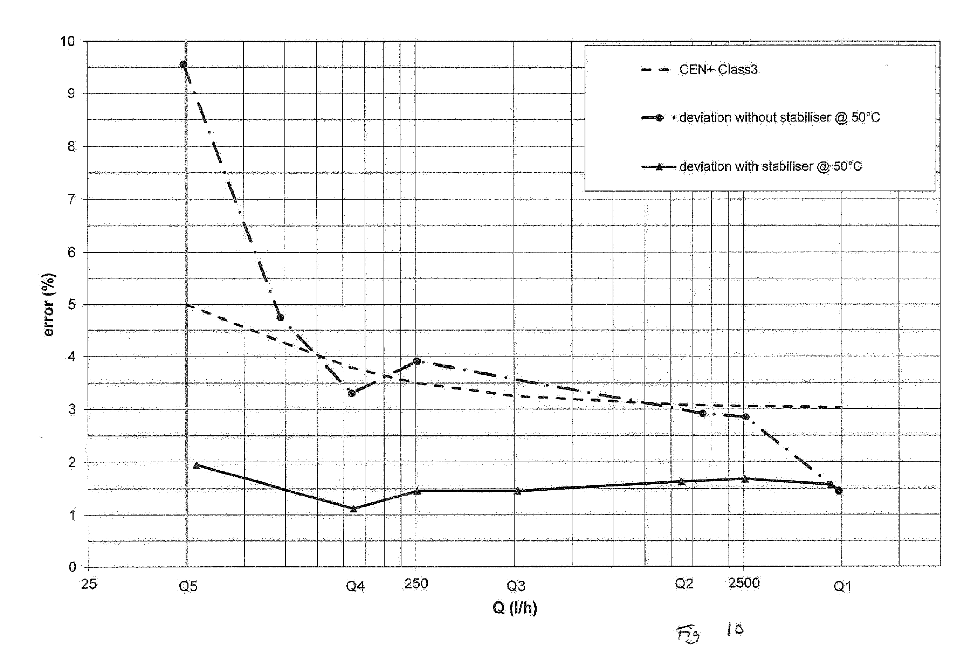

Figure 10 shows results of actual flow rate in litres/hour on a logarithmic scale against metrology error at a fluid temperature of 50 degrees centigrade. The line comprising a dash and dotted line and circular markers represents average deviation of the flow rate measured compared with the actual flow rate. The line comprising a solid line with triangular markers represents average deviation of the flow rate measured compared with the actual flow rate with the stabilizer. The dashed lines show the required European standard for flow meters. It can be seen that with the stabilizer in place the metrology error is significantly reduced across a flow rate of 50 l/hour up to and beyond 2500 l/hour.

The present invention not only serves to reduce the effect of upstream flow disturbances on the accuracy of fluid flow measurement, but has been found that the pressure or head loss is minimised.

The present invention may be carried out in various ways and various modifications are envisaged to the embodiments described without extending outside of the scope of the invention as defined in the accompanying claims.

## Claims

1. A fluid flow stabilizer for an ultrasonic flow meter, the stabilizer comprising a body including a substantially circular aperture and one or more concentric rings of apertures provided around the substantially circular aperture, each of the apertures of the one or more concentric rings of apertures being formed as an annular segment, the substantially circular aperture and the annular segments forming flow channels extending through said body.

2. A fluid flow stabilizer according to claim 1, wherein the annular segments of each of one or more concentric rings are equi-angularly spaced around said substantially circular aperture.

3. A fluid flow stabilizer according to claim 1 or 2, wherein the stabilizer comprises a first and a second concentric ring of apertures.

4. A fluid flow stabilizer according to any preceding claim, wherein the annular segments are formed with rounded ends with a diameter substantially equal to the radial extent or thickness of the annular segments.

5. A fluid flow stabilizer according to any preceding claim, wherein an, in use, upstream face of the body is formed with a substantially convex surface.

6. A fluid flow stabilizer according to any preceding claim, wherein the circular aperture and annular segments extend substantially parallel through the body.

7. A fluid flow stabilizer according to any preceding claim, wherein each of the annular segments extends between 45 degree and 90 degrees about the axis of the circular aperture.

8. A fluid flow stabilizer according to any preceding claim, wherein the flow channels formed by the circular aperture and the annular segments are of substantially equal length.

9. A fluid flow stabilizer according to any preceding claim, wherein the diameter of the circular aperture is between 30% and 40% of the outermost diameter of the one or more rings of apertures.

10. A fluid flow stabilizer according to any preceding claim, wherein the total of minimum distances between ends of annular segments in each ring of apertures is less than 10% of the outer circumference of the annular segments in the ring and/or the radial spacing between the substantially circular aperture and an adjacent ring of apertures and/or between a first ring of apertures and a second ring of apertures is less than 10% of an outermost diameter of an outermost ring of apertures.

11. A fluid flow stabilizer according to any preceding claim when dependent on claim 3, wherein the first ring of apertures is located adjacent the substantially circular aperture and comprises four annular segments and the second ring of apertures is located adjacent the first ring of apertures and comprises eight annular segments.

12. A fluid flow stabilize according to any preceding claim, wherein the stabilizer includes coupling means for coupling the stabilizer to corresponding coupling means provided an inlet aperture of a fluid flow meter.

13. An adapter for mounting an ultrasonic measuring cell, the adapter comprising an inlet channel and an outlet channel, the adapter comprising a fluid flow stabilizer according to any preceding claim arranged over an inlet aperture to said inlet channel.

14. An adapter for an ultrasonic fluid flow meter as claimed in claim 13, wherein the adapter is formed integrally with said fluid flow stabilizer.

15. An ultrasonic fluid flow meter comprising an adapter as claimed in claim 13 or a fluid flow stabilizer as claimed in any of claims 1 to 12.
